# EUROPÄISCHE PATENTSCHRIFT

(11) **EP 1 543 228 B1**
(45) Veröffentlichungstag und Bekanntmachung des Hinweises auf die Patenterteilung: **24.01.2007**
(21) Anmeldenummer: 03750595.5
(22) Anmeldetag: 20.09.2003
(51) Int. Cl.: F02B 1/12, F02B 17/00, F02B 1/02, F02B 3/02, F02B 23/10

(54) **BRENNKRAFTMASCHINE MIT SELBSTZ NDUNG**
SELF-IGNITING INTERNAL COMBUSTION ENGINE
MOTEUR A COMBUSTION INTERNE A AUTO-ALLUMAGE

(30) Priorität: 24.09.2002 DE 10244364
(43) Veröffentlichungstag der Anmeldung: 22.06.2005
(73) Patentinhaber: DaimlerChrysler AG, 70567 Stuttgart (DE)
(72) Erfinder: JURETZKA, Andreas, 70734 Fellbach (DE); SCHÄFLEIN, Jochen, 70327 Stuttgart (DE)
(86) Internationale Anmeldenummer: PCT/EP2003/010514
(87) Internationale Veröffentlichungsnummer: WO 2004/029428

(56) Entgegenhaltungen:
- EP-A- 0 577 352
- WO-A-02/33245
- DE-A- 10 139 058
- US-A1- 2002 007 816
- US-B1- 6 343 585

## Beschreibung

Die Erfindung betrifft ein Verfahren zum Betrieb einer Brennkraftmaschine nach dem Oberbegriff des Anspruchs 1, insbesondere eine selbstzündende Brennkraftmaschine mit Direkteinspritzung.

Bei direkteinspritzenden Brennkraftmaschinen mit Selbstzündung werden oftmals homogene magere Kraftstoff/Luft-Gemische zur Selbstzündung gebracht, so dass hohe Wirkungsgrade und verbesserte Abgasemissionen erzielt werden. Dabei treten bei solchen Brennkraftmaschinen bei hohen Lasten durch die Selbstzündung steile Druckanstiege im Brennraum auf, welche zur einer Beeinträchtigung des Betriebs führen können.

Aus der EP 0 577 352 A1 ist ein Verbrennungsmotor bekannt, mit wenigstens einen Satz aus einem ersten und einem zweiten Zylinder, wobei der erste Zylinder ein größeres Hubvolumen hat als der zweite Zylinder. Den Zylindern sind entsprechende erste und zweite Kolben zugeordnet, die in den genannten Zylindern beweglich sind. Mittel definieren einen Brennraum, der während des Arbeitshubes mit beiden Zylindern in Verbindung steht. Ein Zündmittel steht mit dem Brennraum in Verbindung. Es ist ein Steuermittel vorgesehen, um das Zündmittel zu veranlassen, nach Beginn des Eintretens des Kraftstoff-Luft-Gemisches von dem zweiten Zylinder in den Brennraum und vor dem Ende des Eintretens Zündenergie in den genannten Brennraum freizugeben, um einen Teil des eintretenden Kraftstoffes zu zünden, so dass Temperatur und Druck in dem Brennraum auf Werte ansteigen, die ausreichen, um den Rest des Kraftstoffes durch Kompressionszündung zu entzünden.

Aus der DE 199 27 479 C2 ist ein Verfahren zum Betrieb einer mit Benzin betriebenen Brennkraftmaschine bekannt, bei dem in Abhängigkeit vom Lastpunkt das Kraftstoff/Luft-Gemisch selbstgezündet oder fremdgezündet wird. Dabei wird für die Selbstzündung ein geeignetes, hohes Verdichtungsverhältnis bereitgestellt. In einem Teillastbereich der Brennkraftmaschine wird das homogene Kraftstoff/Luft-Gemisch selbstgezündet, wobei in einem Volllastbereich sowie bei einem Kaltstart der Brennkraftmaschine das Kraftstoff/Luft-Gemisch fremdgezündet wird.

Aus der DE 198 04 983 A1 ist ein Verfahren zum Betrieb eines nach dem Vier-Takt-Verfahren arbeitenden Verbrennungsmotors bekannt, bei dem ein homogenes mageres Grundgemisch von Luft und Kraftstoff mit Kompressionszündung gezündet wird. Dabei wird der Kraftstoff durch eine direkte Kraftstoffeinspritzung derart in den Brennraum eingebracht, dass sich bei einer homogenen Gemischbildung durch die Energiezufuhr infolge der Kompression eine homogene Zündwilligkeit einstellt, und dadurch eine starke selbstbeschleunigende Energiefreisetzung erfolgt. Bei diesem Verfahren wird eine Optimierung der Verbrennung durch eine Variation der Verdichtung und durch gezielte Endhomogenität des Kraftstoff/Luft-Gemisches erreicht.

Nach heutigem Stand der Technik ist eine Steuerung der oben beschriebenen Verbrennung nur schwer zu erzielen, da der Zeitpunkt der Selbstzündung sehr stark von den motorischen Parametern und den Umgebungsbedingungen abhängt. Daher wird versucht, mit Hilfe bestimmter Regelgrößen z.B. durch ein Zylinderdrucksignal die Einleitung der Kompressionszündung zu steuern. Solche Konzepte sind allerdings mit einem hohen Aufwand an Motorsteuerungstechnik verbunden, die zu einem Anstieg der Herstellungskosten bei derartigen Brennkraftmaschinen führt.

Daher liegt der Erfindung die Aufgabe zugrunde, ein Verfahren zum Betrieb einer Brennkraftmaschine zu schaffen, bei dem die Einleitung einer Selbstzündung einfach zu regeln ist, und ein zuverlässiger Betrieb gewährleistet wird.

Diese Aufgabe wird erfindungsgemäß durch ein Verfahren mit den Merkmalen des Anspruchs 1 gelöst.

Das erfindungsgemäße Verfahren zeichnet sich dadurch aus, dass das im Brennraum zurückgehaltene Abgas nach dem Schließen eines Auslassventils während des Ausschiebetakts der Brennkraftmaschine verdichtet wird, so dass nachfolgend die erste Kraftstoffmenge dem mit dem verdichteten zurückgehaltenen Abgas gefüllten Brennraum zugeführt wird. Dadurch wird sichergestellt, dass sich der in den Brennraum eingebrachte Kraftstoff mit dem heißen Abgas vermischt und schnell verdampft. Somit wird ein weitgehend homogenes mageres Grundgemisch mit einer bestimmten Grundtemperatur bereitgestellt.

Dabei wird in einem Bereich eines oberen Totpunkts des Kolbens eine zweite Kraftstoffmenge in den Brennraum derart eingebracht, dass innerhalb des homogenen mageren Grundgemisches eine zündfähige Gemischwolke im Bereich einer Zündquelle gebildet wird und die mit der zweiten Kraftstoffmenge gebildete Gemischwolke mittels der Zündquelle gezündet wird, wobei das im Brennraum vorliegende magere homogene Grundgemisch durch die Verbrennung der mit der zweiten Kraftstoffmenge gebildeten Gemischwolke nachfolgend zu einer Selbstzündung veranlasst wird. Dadurch wird die Einleitung der Selbstzündung derart gesteuert, dass je nach Zeitpunkt der Zündung der Gemischwolke der Zeitpunkt der danach ablaufenden Selbstzündung des Grundgemisches bestimmt bzw. beeinflusst wird. Somit wird die Brennkraftmaschine im wesentlichen bei sämtlichen Betriebszuständen der Kompressionszündung derart betrieben, dass das Potential hinsichtlich Verbrauch und Abgasemissionen genutzt werden kann. Des Weiteren kann durch das erfindungsgemäße Verfahren auf eine aufwendige Verbrennungsregelung und Sondermesstechnik verzichtet werden.

Dabei wird während eines Ausschiebetakts der Brennkraftmaschine Abgas im Brennraum zurückgehalten. Dadurch wird ermöglicht, dass die Temperatur des Grundgemisches geregelt werden kann.

In einer weiteren Ausgestaltung der Erfindung wird die erste Kraftstoffmenge in einem Bereich zwischen 460° Kurbelwinkel und 150° Kurbelwinkel vor einem oberen Zünd-Totpunkt in den Brennraum eingebracht. Durch die frühe Einbringung des Kraftstoffes in den Brennraum wird das aus Kraftstoff, Luft und gegebenenfalls Abgas bestehende Grundgemisch weiterhin verstärkt homogenisiert.

Gemäß einer weiteren Ausgestaltung der Erfindung wird die zweite Kraftstoffmenge in einem Bereich zwischen 0° Kurbelwinkel und 100° Kurbelwinkel vor einem oberen Zünd-Totpunkt in den Brennraum direkt eingespritzt. Durch die späte Direkteinspritzung der zweiten Kraftstoffmenge wird sichergestellt, dass die gebildete Gemischwolke in der Nähe der Zündquelle gebildet wird, so dass sie zuverlässig gezündet werden kann.

Gemäß einer weiteren Ausgestaltung der Erfindung wird die mit der zweiten Kraftstoffmenge im Bereich der Zündquelle gebildeten Gemischwolke in einem Bereich zwischen 80° Kurbelwinkel vor dem oberen Zünd-Totpunkt und 10° Kurbelwinkel nach dem oberen Zünd-Totpunkt gezündet.

Weitere Merkmale und Merkmalskombinationen ergeben sich aus der Beschreibung. Konkrete Ausführungsbeispiele der Erfindung sind in den Zeichnungen vereinfacht dargestellt und in der nachfolgenden Beschreibung näher erläutert. Es zeigen:
- Fig. 1: Eine Schnittdarstellung einer Brennkraftmaschine während eines Ansaugtakts,
- Fig. 2: eine Schnittdarstellung der Brennkraftmaschine aus Fig. 1 während eines Kompressionstakts,
- Fig. 3: eine Schnittdarstellung der Brennkraftmaschine aus Fig. 1 während einer Zündung des in einem Brennraum gebildeten Kraftstoff/Luft-Gemisches, und
- Fig. 4: ein schematisches Diagramm eines Zylinderdruckverlaufs der Brennkraftmaschine aus Fig. 1 während eines erfindungsgemäßen Betriebs aufgetragen über dem Kurbelwinkel.

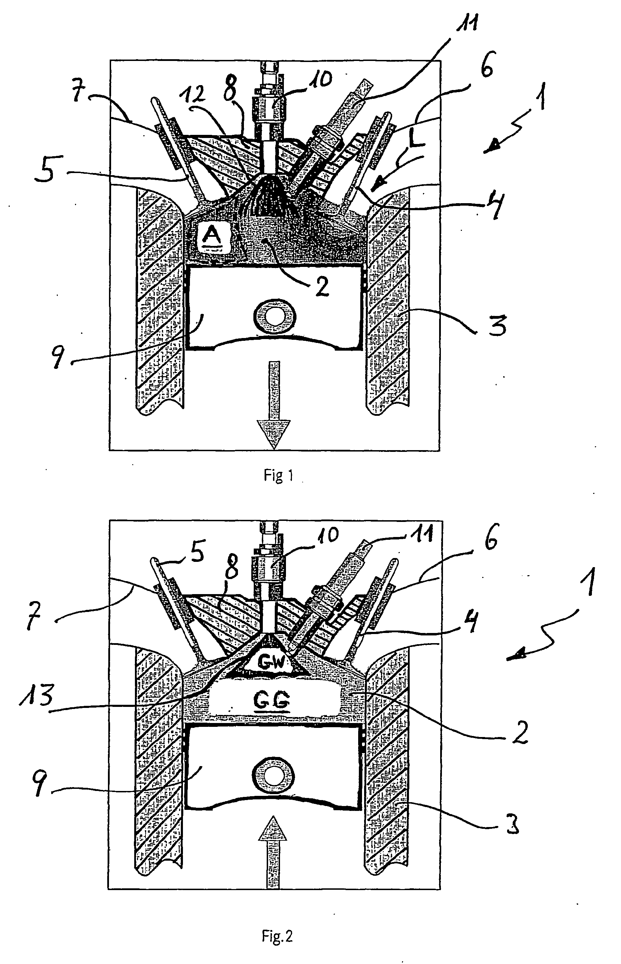

In Fig. 1 ist eine Brennkraftmaschine 1 mit Direkteinspritzung dargestellt, bei der ein Brennraum 2 in mindestens einem Zylinder 3 durch einen längsverschieblich gehaltenen Kolben 9 und einem Zylinderkopf 8 gebildet ist. Die Brennkraftmaschine 1 umfaßt pro Brennraum mindestens ein Einlassventil 4, mindestens ein Auslassventil 5, einen Kraftstoffinjektor 10 und eine Zündquelle 11. Weiterhin sind im Zylinderkopf 8 ein Einlasskanal 6 und ein Auslasskanal 7 angeordnet. Die Anzahl der Einlass- bzw. der Auslassventile ist beispielhaft und kann bei Bedarf erhöht werden.

Der Brennraum 2 der Brennkraftmaschine 1 wird vom Zylinderkopf 8 nach oben hin abgeschlossen, wobei der im Zylinder 3 geführte Kolben 9 den Brennraum 2 nach unten hin begrenzt. Die erfindungsgemäße Brennkraftmaschine 1 arbeitet nach dem Vier-Takt-Prinzip, wobei sie alternativ ebenfalls nach dem Zwei-Takt Prinzip betrieben werden kann.

In einem ersten Ansaugtakt eines Arbeitsspiels bewegt sich der Kolben 9 in einer Abwärtsbewegung bis zu einem unteren Totpunkt UT. Dabei wird über den Einlasskanal 6 dem Brennraum 2 Verbrennungsluft L zugeführt, wobei in einem Ausschiebetakt des vorherigen Arbeitsspiels eine bestimmte Menge an Abgas A im Brennraum 2 zurückgehalten wird, so dass sich die Verbrennungsluft L durch das heiße Abgas A im Brennraum 2 auf eine bestimmte Temperatur erwärmt. Im Ansaugtakt der Brennkraftmaschine 2 wird mittels des Injektors 10 eine erste Kraftstoffmenge 12 direkt in den Brennraum 2 eingespritzt, so dass ein aus Abgas A, Kraftstoff 12 und Verbrenngasluft L bestehendes Grundgemisch GG mit einer Luftzahl λ zwischen eins und zwei gebildet wird. Vorzugsweise wird die erste Kraftstoffmenge 12 in einem Bereich zwischen 460°KW und 150°KW vor einem oberen Zünd-Totpunkt ZOT in den Brennraum eingebracht.

Gemäß Fig. 2 bewegt sich der Kolben 9 in einem weiteren Kompressionstakt in einer Aufwärtsbewegung vom unteren Totpunkt UT bis zum oberen Zünd-Totpunkt ZOT, wobei in einem Bereich des oberen Zünd-Totpunkts ZOT eine weitere zweite Kraftstoffmenge 13 direkt eingespritzt wird. Durch die in den Brennraum eingespritzte zweite Kraftstoffmenge 13 wird im Bereich der Elektroden der Zündkerze 11 eine lokale zündfähige Gemischwolke GW derart gebildet, dass sich eine Luftzahl λ ≥ 1 einstellt. Vorzugsweise wird die zweite Kraftstoffmenge 13 in einem Bereich zwischen 0°KW und 100°KW vor dem Zünd-Totpunkt ZOT in den Brennraum 2 direkt eingespritzt.

In einem Bereich vor dem oberen Zünd-Totpunkt ZOT wird die zündfähige Gemischwolke GW mittels der Zündkerze 11 gezündet. Die Verbrennung der Gemischwolke GW setzt Energie frei, wodurch das Grundgemisch GG erhitzt und selbstgezündet wird. Weiterhin führt die Verbrennung der Gemischwolke GW zu einer Druckerhöhung innerhalb des Grundgemisches GG, so dass die Selbstzündungsbedingungen beim Grundgemisch GG verbessert werden. Vorzugsweise wird die mit der zweiten Kraftstoffmenge 13 im Bereich der Zündquelle 11 gebildete Gemischwolke GW in einem Bereich zwischen 80°KW vor dem Zünd-Totpunkt ZOT und 10°KW nach dem Zünd-Totpunkt ZOT gezündet.

Durch die vor der eigentlichen Selbstzündung eingeleitete Verbrennung der Gemischwolke GW ist es möglich, den Zeitpunkt der Energieumsetzung beim Grundgemisch GG zu steuern. Je nach Zeitpunkt der Fremdzündung der Gemischwolke GW wird der Zeitpunkt der danach ablaufenden Selbstzündung des Grundgemisches GG direkt beeinflusst. Bei der mit der Fremdzündung eingeleiteten Verbrennung der Gemischwolke GW bildet sich eine Flammenfront 16, welche nach der Erfassung der Gemischwolke GW im wesentlichen erlischt. Beim Grundgemisch GG bilden sich nachfolgend durch die freigesetzte Energie mehrere Selbstzündungszentren 15, die unabhängig von der Lage der Flammenfront 16 die Verbrennung des Grundgemisches GG voranschreiten lassen. Dies hat zur Folge, dass die NOx-Emissionen aufgrund einer niedrigen mittleren Verbrennungstemperatur auf einem sehr niedrigem Niveau gehalten werden. Im Gegensatz zu einer konventionellen Schichtladung wird das Grundgemisch GG unter Ausbleiben von Flammenfronten verbrannt.

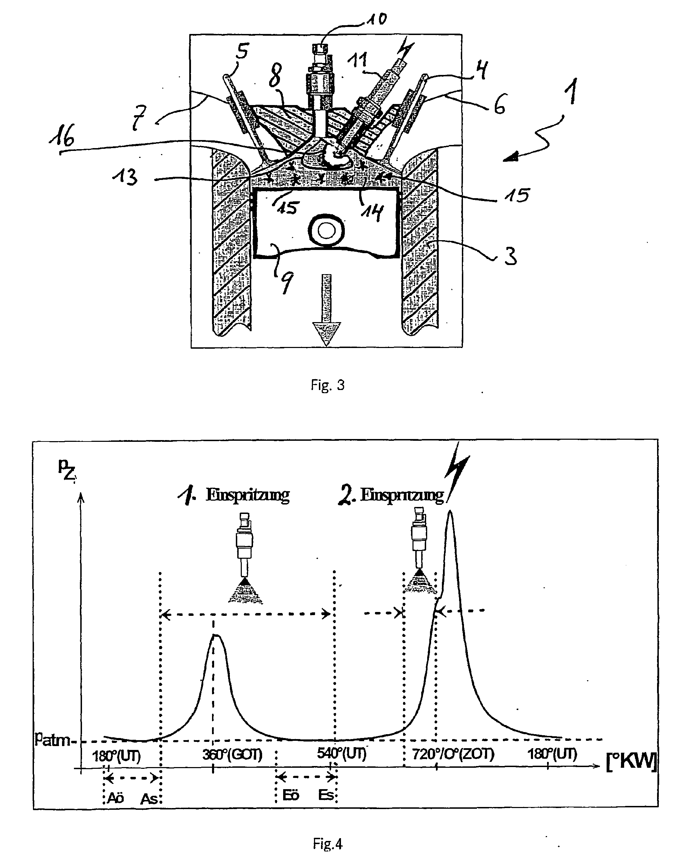

Gemäß Fig. 3 expandiert der Kolben 9 während der noch laufenden Verbrennung in einer Abwärtsbewegung bis zu einem unteren Totpunkt UT. In einem weiteren letzten Takt fährt der Kolben 9 in einer Aufwärtsbewegung bis zu einem oberen Gaswechsel-Totpunkt GOT und schiebt die Abgase aus dem Brennraum 2 über den Auslasskanal 7 aus. Der Einspritzzeitpunkt der zweiten Kraftstoffmenge 13 wird durch die Zeitdauer bestimmt, die notwendig ist, um eine möglichst gute Homogenisierung der zweiten Kraftstoffmenge 13 im Bereich der Zündquelle 11 zu erreichen. Der Zündzeitpunkt der Fremdzündung wird dann so gelegt, dass die Verbrennung ein Optimum hinsichtlich des Verbrauchs und der Abgasemissionen darstellt. Bei der Verbrennung der zweiten Kraftstoffmenge 13 findet eine Erwärmung des Grundgemisches GG statt, so dass das auf einem hohen Energieniveau im restlichen Brennraum 14 vorliegende Grundgemisch GG, im wesentlichen nahe den Bedingungen zur Selbstzündung, selbstgezündet wird.

In Fig. 4 ist ein Zylinderdruckverlauf P_{z} der Brennkraftmaschine 1 über dem Kurbelwinkel KW aufgetragen. Das erfindungsgemäße Verfahren sieht vor, dass durch eine Ventilunterschneidung Abgas im Brennraum 2 zurückgehalten wird, um eine bestimmte Grundgemischtemperatur einstellen zu können. Diese wird in Abhängigkeit von der im Brennraum 2 zurückgehaltenen Abgasmenge derart eingestellt, dass beim Grundgemisch GG am Ende der Kompressionsphase noch keine Selbstzündung eintritt. Die zur Selbstzündung des Grundgemisches notwendige Energie wird dadurch bereitgestellt, dass vor dem Ende der Kompressionsphase die zweite Kraftstoffmenge 13 in den Brennraum 2 direkt eingespritzt und dann gezündet wird.

Gemäß Fig. 4 wird das Auslassventil 5 während des Ausschiebetakts der Brennkraftmaschine 1 in einem Bereich um den unteren Totpunkt UT geöffnet, so dass die Abgase aus dem Brennraum 2 ausgeschoben werden. Das Auslassventil 5 wird dann vor dem Erreichen des Gaswechsel-Totpunkts GOT geschlossen, so dass das im Brennraum 2 zurückgehaltene Abgas A verdichtet wird. Die daraufhin eingespritzte erste Kraftstoffmenge 12 vermischt sich mit dem heißen Abgas A und verdampft. Während des Ansaugtaktes der Brennkraftmaschine 1 wird Verbrennungsluft L durch das Öffnen des Einlassventils 4 angesaugt, so dass sich das im Brennraum befindliche Abgas mit dem verdampften Kraftstoff und der Verbrennungsluft L vermischt. Dabei kann die Kraftstoffeinspritzung der ersten Kraftstoffmenge 12 während oder nach der Verbrennungsluftansaugung erfolgen. Dadurch wird ein mageres homogenes Grundgemisch GG gebildet. Das Grundgemisch GG sollte so mager sein, vorzugsweise mit einer Luftzahl zwischen 1 und 2, dass eine lokale Selbstzündung während der Kompressionsphase gerade noch nicht stattfindet. Es ist denkbar, dass die erste Kraftstoffmenge 12 nach dem schließen des Auslaßventils 5 bis zu einem Anfangsteil des Kompressionstaktes in den Brennraum eingebracht wird. Es ist weiterhin denkbar, dass die erste Kraftstoffmenge 12 getaktet in den Brennraum eingebracht wird, um ein Kraftstoffbenetzung der Zylinderwand zu vermeiden. Während der Kompressionsphase wird dann die zweite Kraftstoffmenge 13 in einem Bereich um den oberen Zünd-Totpunkt ZOT derart in den Brennraum eingespritzt, dass sich eine zündfähige Gemischwolke GW im Bereich der Zündkerze gebildet wird. Es ist denkbar, dass ebenfalls die zweite Kraftstoffmenge 13 getaktet in den Brennraum eingebracht wird. Im Bereich des oberen Zünd-Totpunkt wird durch eine Funkenzündung die Verbrennung der Gemischwolke GW eingeleitet.

Es ist denkbar, dass das erfindungsgemäße Verfahren anstatt der Abgasrückhaltung mit einer Abgasrückführung durchgeführt wird. Dabei wird mittels eines nicht dargestellten Abgasrückführventils Abgas aus dem Abgasauslasskanal 7 in den Einlasskanal 6 zurückgeführt, so dass eine bestimmte Grundgemischtemperatur eingestellte wird. Alternativ kann die Abgasrückführung intern erfolgen. Dabei wird während des Ausschiebetakts über das geöffnete Einlassventil 4 das Abgas zum Teil in den Einlasskanal 6 ausgeschoben und dann mit der angesaugten Verbrennungsluft L während des Ansaugtakts wieder in den Brennraum 2 angesaugt. Hierfür wird das Einlassventil 4 in einem Anfangsteil des Ausschiebetakts geöffnet und in einem Endteil des Ansaugtakts geschlossen, wobei das Auslassventil 5 während des Ausschiebetakts geöffnet und in einem Endteil des Ausschiebetakts geschlossen wird.

Des Weiteren kann die Abgasrückführung intern derart erfolgen, dass während des Ausschiebetakts das Abgas vollständig in den Auslasskanal 7 ausgeschoben und dann während des Ansaugtakts über das geöffnete Auslassventil 5 zum Teil wieder in den Brennraum 2 angesaugt wird. Dabei wird nach oder während des Schließvorgangs des Auslassventils 6 das Einlassventil 4 geöffnet. Hierfür wird das Auslassventil 5 in einem Anfangsteil des Ausschiebetakts geöffnet und in einem Anfangsteil des Ansaugtakts geschlossen, wobei das Einlassventil 4 in einem Anfangsteil des Ansaugtakts geöffnet und in einem Endteil des Ansaugtakts geschlossen wird, so dass nach bzw. während des Schließvorgangs des Auslassventils 6 die Verbrennungsluft L in den Brennraum 2 hineinströmt.

Es ist weiterhin denkbar, dass die erste Kraftstoffmenge 12 mittels einer Saugrohrkraftstoffeinspritzung in den Brennraum eingebracht wird. Des weiteren kann ein Kraftstoffinjektor verwendet werden, der in der Lage ist, den Kraftstoff mit Verbrennungsluft zu vermischen und dann in den Brennraum als ein Gemisch einzublasen. Alternativ kann ein Kraftstoffinjektor verwendet werden, der gleichzeitig als eine Zündquelle dient.

Durch das erfindungsgemäße Verfahren wird die Verbrennung eines homogenen Gemisches mittels einer Kompressionszündung ohne aufwendige Motorsteuerung ermöglicht. Dabei wird sichergestellt, dass unabhängig von den motorischen Parametern und Umgebungsbedingungen die Selbstzündung des homogenen Kraftstoff/Luft-Gemisches in jedem Verbrennungszyklus stattfindet. Somit werden Verbrennungsaussetzer bei einer homogenen Verbrennung mittels einer Kompressionszündung zuverlässig vermieden.

Dadurch wird ermöglicht, dass die Brennkraftmaschine 1 im wesentlichen bei allen Lastpunkten bzw. Lastbereichen mit Kompressionszündung betrieben werden kann. Es wird weiterhin nahezu unabhängig von den motorischen Parametern und Umgebungseinflüssen sichergestellt, dass es zu keinen Zündaussetzern während des gesamten Betriebs kommt. Dadurch entsteht durch jeden Verbrennungszyklus Abgas, welches für den folgenden Verbrennungszyklus bei einem erfindungsgemäßen Betrieb der Brennkraftmaschine notwendig ist. Somit wird sichergestellt, dass in jedem Zyklus eine Verbrennung mit Kompressionszündung stattfinden kann. Es wird daher ebenso in einem oberen Lastbereich ermöglicht, dass durch den kontrollierten Entzündungszeitpunkt niedrigere Brennraumdruckschwingungen erzielt werden.

## Patentansprüche

1. Verfahren zum Betrieb einer Brennkraftmaschine mit einer Kraftstoffdirekteinspritzung und/oder Kraftstoffsaugrohreinspritzung, einem Zylinder, einem Zylinderkopf, einem Kolben und einem zwischen dem Zylinderkopf und dem Kolben begrenzten Brennraum, bei dem
- dem Brennraum Luft und eine erste Kraftstoffmenge derart zugeführt wird, dass
- im Brennraum ein homogenes mageres Grundgemisch gebildet wird, wobei
- in einem Bereich eines oberen Totpunkts des Kolbens eine zweite Kraftstoffmenge in den Brennraum derart eingebracht wird, dass
- innerhalb des homogenen mageren Grundgemisches eine zündfähige Gemischwolke im Bereich einer Zündquelle gebildet wird, und
- die mit der zweiten Kraftstoffmenge gebildete Gemischwolke mittels der Zündquelle gezündet wird, wobei
- das im Brennraum vorliegende magere homogene Grundgemisch durch die Verbrennung der mit der zweiten Kraftstoffmenge gebildeten Gemischwolke nachfolgend zu einer Selbstzündung veranlasst wird,
- dass während eines Ausschiebetakts der Brennkraftmaschine Abgas im Brennraum zurückgehalten wird,
**dadurch gekennzeichnet** ,
das im Brennraum zurückgehaltene Abgas nach dem Schließen eines Auslassventils während des Ausschiebetakts der Brennkraftmaschine verdichtet wird, so dass nachfolgend die erste Kraftstoffmenge dem mit dem verdichteten, zurückgehaltenen Abgas gefüllten Brennraum zugeführt wird.

2. Verfahren nach Anspruch 1,
**dadurch gekennzeichnet ,**
**dass** durch eine Ventilunterschneidung Abgas im Brennraum zurückgehalten wird.

3. Verfahren nach einem der vorhergehenden Ansprüche
**dadurch gekennzeichnet ,**
**dass** die erste Kraftstoffmenge in einem Bereich zwischen 460°KW und 150°KW vor einem oberen Zünd-Totpunkt in den Brennraum eingebracht wird.

4. Verfahren nach Anspruch 1,
**dadurch gekennzeichnet ,**
**dass** die zweite Kraftstoffmenge in einem Bereich zwischen 0°KW und 100°KW vor einem oberen Zünd-Totpunkt in den Brennraum direkt eingespritzt wird.

5. Verfahren nach einem der vorhergehenden Ansprüche
**dadurch gekennzeichnet,**
**dass** die mit der zweiten Kraftstoffmenge im Bereich der Zündquelle gebildeten Gemischwolke in einem Bereich zwischen 80°KW vor dem oberen Zünd-Totpunkt und 10°KW nach dem oberen Zünd-Totpunkt gezündet wird.

6. Verfahren nach einem der vorhergehenden Ansprüche
**dadurch gekennzeichnet,**
**dass** die erste Kraftstoffmenge in ein Saugrohr der Brennkraftmaschine oder in den Brennraum direkt eingespritzt wird.

7. Verfahren nach einem der vorhergehenden Ansprüche
**dadurch gekennzeichnet,**
**dass** eine im Brennraum angeordnete Kraftstoffeinspritzeinrichtung gleichzeitig als die Zündquelle verwendet wird.

8. Verfahren nach einem der vorhergehenden Ansprüche
**dadurch gekennzeichnet,**
**dass** die Brennkraftmaschine mit einem Verdichtungsverhältnis zwischen 8 und 16, insbesondere zwischen 8 und 13 betrieben wird.

## Claims

1. Method for operating an internal combustion engine with direct fuel injection and/or fuel induction pipe injection, a cylinder, a cylinder head, a piston and a combustion chamber that is delimited between the cylinder head and the piston, in which method
- air and a first fuel quantity are fed to the combustion chamber, in such a manner that
- a homogeneous lean base mix is formed in the combustion chamber,
- a second fuel quantity being introduced into the combustion chamber in the region of a top dead centre of the piston, in such a manner that
- an ignitable mix cloud is formed within the homogenous lean base mix in the region of an ignition source, and
- the mix cloud formed by the second fuel quantity is ignited by means of the ignition source,
- the lean homogenous base mix which is present in the combustion chamber subsequently being subjected to compression ignition by the combustion of the mix cloud formed by the second fuel quantity,
- during an exhaust stroke of the internal combustion engine exhaust gas being retained in the combustion chamber,
**characterized in that** the exhaust gas retained in the combustion chamber is compressed after an exhaust valve has closed during the exhaust stroke of the internal combustion engine, so that subsequently the first fuel quantity is fed to the combustion chamber filled with the compressed, retained exhaust gas.

2. Method according to Claim 1, **characterized in that** exhaust gas is retained in the combustion chamber by means of a valve overlap.

3. Method according to one of the preceding claims, **characterized in that** the first fuel quantity is introduced into the combustion chamber in a region between 460°CA and 150°CA before an ignition top dead centre.

4. Method according to Claim 1, **characterized in that** the second fuel quantity is injected directly into the combustion chamber in a region between 0°CA and 100°CA before an ignition top dead centre.

5. Method according to one of the preceding claims, **characterized in that** the mix cloud which is formed using the second fuel quantity in the region of the ignition source is ignited in a region between 80°CA before the ignition top dead centre and 10°CA after the ignition top dead centre.

6. Method according to one of the preceding claims, **characterized in that** the first fuel quantity is injected into an induction pipe of the internal combustion engine or directly into the combustion chamber.

7. Method according to one of the preceding claims, **characterized in that** a fuel injection device arranged in the combustion chamber is simultaneously used as the ignition source.

8. Method according to one of the preceding claims, **characterized in that** the internal combustion engine is operated with a compression ratio of between 8 and 16, in particular between 8 and 13.

## Revendications

1. Procédé pour faire fonctionner un moteur à combustion interne muni d'un dispositif d'injection directe du carburant et/ou d'un dispositif d'injection de carburant à collecteur d'admission, d'un cylindre, d'une culasse, d'un piston et d'une chambre de combustion délimitée entre la culasse et le piston, avec lequel
- de l'air et une première quantité de carburant sont acheminés à la chambre de combustion de telle sorte que
- un mélange de base pauvre homogène soit formé dans la chambre de combustion,
- une deuxième quantité de carburant étant introduite dans la chambre de combustion dans une zone d'un point mort haut du piston de telle sorte que
- un nuage de mélange inflammable soit formé à l'intérieur du mélange de base pauvre homogène dans la zone d'une source d'allumage et
- le nuage de mélange formé avec la deuxième quantité de carburant est allumé au moyen de la source d'allumage,
- le mélange de base pauvre homogène présent dans la chambre de combustion étant ensuite amené en autoallumage par la combustion du nuage de mélange formé avec la deuxième quantité de carburant,
- pendant un cycle d'éjection du moteur à combustion interne, les gaz d'échappement sont retenus dans la chambre de combustion,
**caractérisé en ce**
**que** les gaz d'échappement retenus dans la chambre de combustion sont comprimés pendant le cycle d'éjection du moteur à combustion interne après la fermeture d'une soupape d'échappement de sorte que la première quantité de carburant soit ensuite acheminée à la chambre de combustion remplie avec les gaz d'échappement retenus comprimés.

2. Procédé selon la revendication 1, **caractérisé en ce que** les gaz d'échappement sont retenus dans la chambre de combustion par un chanfreinage du dessous de soupape.

3. Procédé selon l'une des revendications précédentes, **caractérisé en ce que** la première quantité de carburant est introduite dans la chambre de combustion dans une zone entre 460°KW et 150°KW avant un point mort d'allumage haut.

4. Procédé selon la revendication 1, **caractérisé en ce que** la deuxième quantité de carburant est injectée directement dans la chambre de combustion dans une zone entre 0°KW et 100°KW avant un point mort d'allumage haut.

5. Procédé selon l'une des revendications précédentes, **caractérisé en ce que** le nuage de mélange formé dans la zone de la source d'allumage avec la deuxième quantité de carburant est allumé dans une zone entre 80°KW avant le point mort d'allumage haut et 10°KW après le point mort d'allumage haut.

6. Procédé selon l'une des revendications précédentes, **caractérisé en ce que** la première quantité de carburant est injectée dans un collecteur d'admission du moteur à combustion interne ou directement dans la chambre de combustion.

7. Procédé selon l'une des revendications précédentes, **caractérisé en ce qu'**un dispositif d'injection du carburant disposé dans la chambre de combustion est utilisé simultanément comme source d'allumage.

8. Procédé selon l'une des revendications précédentes, **caractérisé en ce que** le moteur à combustion interne fonctionne avec un rapport de compression compris entre 8 et 16, notamment entre 8 et 13.
